# EUROPEAN PATENT APPLICATION

(11) **EP 3 675 016 A1**
(43) Date of publication of application: **01.07.2020**
(21) Application number: 18216019.2
(22) Date of filing: 31.12.2018
(51) Int. Cl.: G06Q 30/02

(54) **SYSTEM AND METHOD FOR CALCULATING GRP RATINGS**

(71) Applicant: Adoptomedia Oü, 67403 Otepää (EE)
(72) Inventor: KUZNETCOV, Aleksei, 20309 Narva (EE); KAPELYUSHNIK, Marat, Hod-Hasharon 4536195 (IL)
(74) Representative: Sarap, Margus

(57) **Abstract**

A computer-implemented system and method for transparent automated data gathering flow for calculation of Gross Rating Points (GRP) ratings in compliance with European Union General Data Protection Regulation (GDPR) and to provide corresponding transparent EU GDPR compliance GRP rating reports, wherein the GRP ratings are calculated for different type of media on the same panel based on auto generated surveys without human works. The GDPR non-compliance problem in GRP calculation is solved by computer-implemented smart contract procedure using the distributed ledger as decentralized database provided by blockchain platforms supporting smart contract functionality.

## Description

### FIELD OF THE INVENTION

The present invention relates to the field of media budgeting, Media Mix Modelling, marketing analytics, advertising planning and buying operations, more specifically to the field of Gross Rating Points (GRP) ratings, using GRP ratings in media ROI calculation process and modelling media impact by GRP ratings related to advertising planning processes.

### PRIOR ART

In advertising, a gross rating point (GRP) is a measure of the size of an advertising campaign by a specific medium or schedule. The purpose of the GRP metric is to measure impressions in relation to the number of people in the target for an advertising campaign. Calculation values of GRP ratings are commonly used by media buyers to compare the advertising strength of components of a media plan. Advertising is modeling by GRP ratings, which means that when to build model, GRP ratings are used as parameter for representing the ad in a model, preferably 36 months to model year seasonality. Known Ad planning decisions for different type of media are based on different calculation models. Known models have several problems, including the known models are not transparent and not in compliance with European Union General Data General Data Protection Regulation (GDPR).

For example in performance ad (Google AdWords, Facebook, Twitter) track pixel is used and cookies approach marketing funnel is calculated: user sees ad, goes to website, makes action on website (buy, achieve goal). The problem of performance ad is that it can't stimulate new customer's need, only working with existing needs. Ad planning decisions are based on conversion rates on all funnel steps (CPA).

In display ad (digital banners, digital TV) - user sees ad, and then may be decides to buy products in some time in the future. Display ad stimulates new customer's needs. Main approach for planning and buying display ad: allocated budget with CPM (cost per 1000 impressions) for selected audience. The problem in this approach is, that advertiser don't have clear understanding about the conversion.

In the approach of calculating impact of offline media (TV, OOH, radio, press), the same CPM approach is used as in Display ad, but advertiser can't buy one contact with one user with selected profiles as offline media is sold based on inventory approach not on impression approach. Each ad inventory has own affinity (share of advertiser's target audience in all audience of ad inventory). For example, GRP rating providers Kantar TNS, Geopath, Comscore calculate GRP ratings for each ad media type, that show number of users who can see ad on offline ad media (TV channel, radios station, billboard and etc.) and make partnership with each other (by sharing GRP ratings results) to provide advertisers ratings for each channel.

In the approach where Digital Display As and offline Media is combined, the system collects touchpoints with different ads for one cookie representing user ID (matching cookie as a Display ad user profile identification with mac address of his mobile phone / IP TV) and calculates extended user profile for one cookie and target ad campaigns to this profile. System collects touchpoints with different ads for users where system can make matching building panel and shares panel touchpoints to the whole population. Based on shared results, the system calculates media mix and allocates media budget for different ad formats and channels. The problem in this approach is that it is not in compliance with European Union General Data General Data Protection Regulation (GDPR); the cookies are stored only one month; social media, telecom and other companies don't share cookies with each other's; there is no methodology for checking representativeness of building panel.

In MediaMix Models an econometric approach that link target Key Performance Indicator (KPI) (sales, issued loans, foot traffic and etc.) with different factors influence on this KPI is used. Factors, that are not driven by marketing, are provided by commercial department of the company (that used in company forecast), and factors are driven by marketing (company advertising, competitors advertising, number of promotions, and other marketing instruments). MediaMix models combine overall impact to target KPI to online and offline media and separate this impact from factors that are not driven by marketing. For example, US patent application US2014074587A1 describes in details how media mix modelling process is organized for determining advertising effectiveness in cross-media campaigns. In US2014074587A1 the building of media mix model by advertiser is based on peace of data with unknown quality (in statistics terms) and the advertiser can't assume quality of whole media mix model. When model outcome is used for media budget allocation it leads to financial loses. In terms of money, the advertiser can easily overspend media budget (it's can be up to 30% of budget) and not receive planning sales goals 3-10% of sales level).

The transparency and non-compliance with the EU GDPR policy is also known from several other known prior art. For example, the U.S. patent application US2018253754A1 (DATORAMA TECH LTD) describes system and method for tracking users across a plurality of media platforms and disclosures harnessing big data gathered from multiple data sources and analytic measurements across multiple data sources. It describes how campaign managers who like to have better understanding about the reach of advertisements and whether their budget was well spent have limited tools by which to do so. As a result, in addition to the transparency and non-compliance with the EU GDPR problems, the problem of this solution is that campaign managers cannot efficiently analyze and understand the performance of an advertisement campaign when offline media is used. The U.S patent application US2015012337A1 (INFORMATION RESOURCES INC) describes data integration and analysis how various data sets are often available from many (though not all) market participants. The market participants can include any entity participating in a market (whether on the supply side or demand side), such as retailers, manufacturers, publishers, service providers, etc. Moreover, the term "market participant" includes third-party analysts or aggregators of market data in a particular market, even if they do not participate in that market themselves. The "Panel" market participant denotes an organization that collects data from a group of consumers (e.g., by survey or other mechanism by which consumers self-report their behavior) without necessarily selling to or buying from the consumers. In addition to the transparency and non-compliance with the EU GDPR problems, the problem of this solution is that it is organized to build post sales reports based on questionnaires, so it does not fit for GRP ratings calculation and it does not provide auto generated surveys with one day frequency.

International patent application WO2013184588A1 (VISUAL IQ INC) describes method and system for determining touchpoint attribution and procedure for determining the influence of various advertising touchpoints on a consumer conversion. In addition to the transparency and non-compliance with the EU GDPR problems, the problem of this solution is that it is based on cookies approach where probability models to identify user behavior is used and not supporting offline media touchpoints.

Using panel research as information resources is described for example in patent applications US2015012337A1 and WO2013184588A1, but these solutions work with sales analytics, not with GRP ratings. They organize their panel data gathering and profiling based on questionnaire approach conducted 1 month or rarely. Data built on questionnaire is not good in modelling, because it has a lot of subjectivity and can't model micro trends. For example, if to ask somebody, when and where you have heard or seen advertising of BMW, the person can only remember big advertising formats (like BMW promo in central supermarket), but the person never remember that he/she saw their advertisement in some specific place at specific time.

The transparency problem in GRP calculation means that precision of media mix optimization models depends of data quality used to build them. Data using in modelling factors which are not driving by marketing has observed quality and can be measured. For GRP ratings advertiser doesn't have a specification what method and data are used to calculate them (only general approach).

Other transparency problems in Ad planning, that influence on quality of GRP ratings provided by major providers of GRP ratings like Kantar TNS, Comscore, Geopath has a conflict of interest as described in K2 report (https://ana.net/content/show/id/industry-initiative-media-transparency-report). The main GRP rating providers also doesn't show how they exactly calculate the GRP ratings.

Other main problem known from prior art is non-compliance with the EU GDPR policy. Programmatic technologies are used to buy display ad based on cookies/mac address approach. Users don't provide their personal data (cookies/mac address) for programmatic platforms like real time bidding exchanges, analytics services (Google analytics), mobile applications and others. To defend users from collecting their personal data (cookie/mac address) without their permit General Data Permission Regulation starts working on the territory of European Union (https://eugdpr.org/). This regulation had a dramatic influence in all programmatic technologies. For example, OTTO GROUP (https://digiday.com/marketing/brands-dont-want-headlines-advertisers-pause-programmatic-spending-gdprs-immediate-aftermath/) stops their displays ad campaigns because advertising agencies and programmatic platforms can't provide OTTO permit to use user's cookies/mac addresses. Without permit government can make a penalty up to the 10% of overall company revenue.

In addition to transparency and non-compliance with the EU GDPR policy the known solutions have also profiling and multichannel GRP problem. For example, companies like Lexus has a very specific profile of clients, so they can't rely on GRP ratings provided by Kantar TNS, Comscore and Geopath providing basic socio-demographics profiles. Targeting to basic profiles except of specific profiles advertiser can overspend budget by choosing ad inventory with low target GRP. When advertiser plans campaign on all media the advertiser needs to consider that one customer contacts with different type of media in one day. From current GRP ratings providers, advertiser doesn't know intersection between GRP ratings calculated for each different media channel differently. Without this coefficient advertiser can't calculate the whole impression of advertising from different channels (i.e. TV, Radio, Digital Display Ad, Out-of-Home (OOH)) and make optimization of media mix based on this data. Without target GRP calculation and cross-media GRP budget overspends can be from 10% to 45% depending on client's profile.

### SUMMARY OF THE INVENTION

The aim of the present invention is to provide a system and method for transparent automated data gathering flow for calculation of Gross Rating Points (GRP) ratings in compliance with European Union General Data Protection Regulation (GDPR) and to provide corresponding transparent EU GDPR compliance GRP rating reports.

The aim of the invention is achieved by the system and method of operating data-processing system for calculating transparent and GDPR compliance GRP ratings comprising steps of
a. initiating data exchange process by registering system administrator account, members, GRP rating report buyer, KYC provider and data auditor in the system through the user interfaces in one or more servers 10;
b. initiating the preparing process by uploading profile statistics of registered members, media database, socio-demographics statistics, profiling table, raw marketing data and touchpoints for selected panel member, GRP ratings for selected inventory from the server of the system to distributed ledger;
c. preparing and creating a wallet for system administrator and data auditor, integrating system with distributed ledger through created system administration wallet;
d. preparing and launching smart contract in distributed ledger for each system administrator, data auditor and member;
e. profiling the registered members by creating member basic profile based on the KYC procedure;
f. providing to the registered members a connecting means (i.e. corresponding software, extension, plugin, API) to connect at least one device of each registered member to the server of the system for automatic gathering raw marketing data with their impressions with advertising in different channels;
g. building a panel of the registered members and starting gathering raw data from the panel member devices by the connecting means installed into one or more member device to raw data gathering module;
h. calculating touchpoints for the panel members;
i. calculating extended profiles of each panel member based on the raw marketing data gathered through the devices, profiling table, panel member's touchpoints and basic profile;
j. based on panel members extended profiles and touchpoints calculating GRP ratings for inventory IDs in media database for all profiles and provide access to GRP ratings to GRP rating report buyer;
k. carrying out data auditing process including transparency check of raw marketing data gathering and calculating touchpoints process, transparency check of GRP calculating process and GDPR compliance check.

The main differentiation from current GRP providers and prior art are following.

Cross media approach - in the present invention GRP ratings are calculated for different type of media on the same panel (each panel member transfers raw marketing data from different sources) based on auto generated surveys without human works.

Transparency approach - in the present invention data auditor can check process of calculating GRP and check GDPR compliance of provided GRP ratings to buyers.

The transparency problem in GRP calculation is solved in the present system and method by computer-implemented transparency check procedure. The Step "Transparency check of raw marketing data gathering and calculating touchpoints process" shows how present invention provides data auditor all necessary information to make transparency check of panel building. The Step "Transparency check of GRP calculating process" shows how present invention provides data auditor all necessary information to make transparency check of GRP ratings calculation based on panel member's raw marketing data and touchpoints. For transparency purposes two databases, an internal database for system operating and a distributed ledger for data auditing process, are used in parallel in the present system, which enables for transparency purposes to publish raw marketing data and calculation algorithms used in calculations of GRP ratings and the distributed ledger ensures that the published data can't be changed. This makes possible, that everyone can check the whole process of GRP calculations.

The GDPR non-compliance problem in GRP calculation is solved in the present system and method by computer-implemented smart contract procedure. All panel users sign a smart contract after registration in the system that gives to the system granted access to their raw marketing data and touchpoints in two ways. During the registration, the member can choose between two types of membership status, to become a selected member or not selected member. As a selected member, after signing the smart contract, the selected member gives full public access to his/her profile and raw marketing data. As a not selected member, after signing the smart contract, the not selected member gives only access for aggregated statistics and all touchpoints with selected inventory. If member doesn't want to share any raw marketing data and touchpoints, the member revokes current smart contract and his profile will be updated in distributed ledger. All raw marketing data and touchpoints associated with the member, who has revoked the smart contract will be deleted in internal database and all links to his raw marketing data and touchpoints became unavailable from distributed ledger to internal database. The transparency and compliance with the EU GDPR policy is assured through the compliance check by data auditor, who has access to GRP ratings for selected inventory ID's and which is enabled by using in the system two databases.

In addition to the transparency and GDPR non-compliance problem in GRP calculations several other problems known in prior art has been solved by present invention.

The profiling and multichannel problem in GRP calculation is solved in the present system and method as follows. The system through the raw data gathering module automatically gathers raw marketing data from the member's different devices. The process of gathering raw marketing data from the registered members starts from authorization the member in Single Sign One Server (SSO). For one panel member system collects touchpoints from all media for one member. Because of SSO functionality, system provides multichannel GRP and knows intersection between different media channels.

The system calculates panel member basic profile and extended profile. Target GRP ratings for a specific audience are calculated based on this panel members profiles.

The data auditor can download statistics for current panel structure and checks if audience segments, he is interested in has a statistical representativeness in terms of panel members.

Differently from the solutions known in the prior art the present system and method using cross media GRP calculation approach can save up to 30 percent from media budget for selected client, because client can calculate the whole impression of advertising from different channels and makes optimization of media mix based on cross media GRPs.

Compared to the problems known form closest prior art US2015012337A1, WO2013184588A1, US2018253754A1, US2014074587A1 several further problems have been solved in the present invention.

On the contrary to US2015012337A1 and WO2013184588A1, the present invention gathers raw marketing data based on automatically generated one day surveys and provides data auditors all algorithms and data samples for transparency check through distributed ledger guaranteed permanence of algorithms and data samples once uploaded to the system. Surveys can work only to find global trends, so marketing decision for micro-targeting purpose (to find profile of advertising consumption of rare audience) and calculate cross media effects are not supported by survey's approach. K2 report shows that transparency problem can cost up to 30% of media budget.

On the contrary to US2018253754A1, present invention doesn't not track and store each contact of user with Digital Ad, but tracks and stores contacts of panel member with all type of media (online and offline). When advertiser tracks all users he has a GDPR problem which can cost (if advertiser can't provide user permit to use his personal data) up to 10% of company revenue.

On the contrary to US2018253754A1, panel members of present invention pass Know Your Client (KYC) procedure, so panel member's basic profile is identified properly based on their official documents without any probability models as in US2018253754A1. Living period of cookie is about 1 month, after this period cookie deleted by browser. If client of advertiser has customer journey up to 1 month his profile according cookie approach can change several times, and advertiser can make wrong decision (for example not support potential client by advertising campaign after 1 month and it will comes that client buy alternative solution or after buyer's cookie will be deleted his profile will change from men to women after he visit some women site).

On the contrary to US2018253754A1, in the present invention all panel members provide approval to use their raw marketing data and touchpoints for media planning purpose which is needed to support GDPR regulation. GDPR problem which can cost (if advertiser can't provide user permit to use his personal data) up to 10% of company revenue.

Software that calculates media mix models (US2014074587A1 used GRP ratings as an input, not providing data quality analysis of GRP ratings. On the contrary to US2014074587A1, present invention focus on GRP ratings calculation process, not on process of supporting media mix models. In terms of money advertiser can overspend media budget (it's can be up to 30% of budget) and not receive planning sales goals 3-10% of sales level) if he rely on GRP rating with errors while media mix modelling.

In the prior art it is known, that for the GRP ratings advertiser doesn't have a specification what method and data the advertiser has used to calculate GRP ratings. In the present invention this problem is solved by enabling to data auditor to download clear statistics about panel members, it's dynamics and algorithms used for calculations.

In the prior art it is also widely known problem, that the quality of GRP rating reports is low and current models are too expensive to collect high quality data to prepare high quality GRP ratings. In the present invention the quality is guaranteed by providing statistics about the panel to GRP ratings report buyer for existing panel and providing whole population of current region, so the advertiser can use the statistic for calculations.

In the prior art it is also known problem, that current data providers of GRP advertiser don't know intersection between GRP for different channels. According to the present invention this problem is solved by gathering data for one user for different channels.

In the prior art it is also known problem, that the advertisers don't have clear understanding about the conversion. In the present invention it is solved by using Media mix models to calculate impact of whole media mix including display ad and offline media by providing GRP ratings.

### DESCRIPTION OF THE DRAWINGS

The invention is explained more precisely with references to the following figures, where
Fig 1a shows a block scheme of the method of calculating transparent and GDPR compliance multichannel GRP ratings according to the present invention;
Fig 1b shows an overview of architecture and components of the system for carrying out the method according to the present invention;
Fig 2 illustrates using two databases of the system in parallel of Fig 1a;
Fig 3 illustrates steps of the method related to the different type of users carried out on the system and external services connected to the system;
Fig 4 describes steps of the method of implementing smart contract's capabilities on existing distributed ledger to provide algorithms and data samples for data auditors of Fig 1a;
Fig 4a describes preparing and launching wallets and preparing and launching smart contracts carried out by the system shown in Fig 1b and Fig 4;
Fig 5 describes steps of the method regarding building and managing panel of Fig 1a;
Fig 5a describes the process of building a panel carried out by the system shown in Fig 1b and Fi 5;
Fig 6 describes steps of the method regarding preparing GRP ratings for GRP rating report buyer and data auditors of Fig 1a;
Fig 6a describes preparing GRP ratings for GRP rating report buyer and data auditors carried out by the system shown in Fig 1b and Fig 6;
Fig 7 describes steps of the method related to calculations of panel member's touchpoints of Fig 1a;
Fig 7a describes calculating panel member's touchpoints carried out by the system shown in Fig 1b;
Fig 8 describes steps of the method related to calculation of panel member's extended profile of Fig 1a;
Fig 9 describes steps of the method related to calculation GRP ratings as shown in step 2.1 of Fig 6;
Fig 10 describes steps of the method related to data auditing process of Fig 1a.

### DETAILED DESCRIPTION OF THE INVENTION

Method of operating data-processing system for calculating transparent and GDPR compliance GRP ratings comprises steps of:
a. initiating data exchange process by registering system administrator account, members, GRP rating report buyer, KYC provider and data auditor in the system through the user interfaces 1400, 1500 in one or more servers 10;
b. initiating the preparing process by uploading profile statistics of registered members, media database, socio-demographics statistics, profiling table, raw marketing data and touchpoints for selected panel member, GRP ratings for selected inventory from the module 10 to distributed ledger 400;
c. preparing and creating a wallet for system administrator and data auditor, integrating system with distributed ledger 400 through created system administration wallet;
d. preparing and launching smart contract in distributed ledger 400 for each system administrator 202, data auditor 205 and member 203;
e. profiling the registered members by creating member basic profile based on the KYC procedure;
f. providing to the registered members a connecting means (i.e. corresponding software, extension, plugin, API) to connect at least one device 1000 of each registered member to the system 10 for automatic gathering raw marketing data with their impressions with advertising in different channels;
g. building a panel of the registered members and starting gathering raw data from the panel member devices by the connecting means installed into one or more member device 1000 to raw data gathering module 600;
h. calculating 503 touchpoints for the panel members;
i. calculating 504 extended profiles of each panel member based on the raw marketing data gathered through the devices 1000, profiling table, panel member's touchpoints and basic profile;
j. based on panel members extended profiles and touchpoints calculating GRP ratings for all inventory IDs in media database for all profiles, wherein all profiles comprise basic profiles (defining age, country, sex), extended profiles (defining interests, profession, etc. in addition to basic profile features) and mixed profiles, wherein mixed profile is a combination of basic profile and extended profile) and providing access to GRP ratings to GRP rating report buyer;
k. carrying out data auditing process including transparency check of raw marketing data gathering and calculating touchpoints process, transparency check of GRP calculating process and GDPR compliance check.

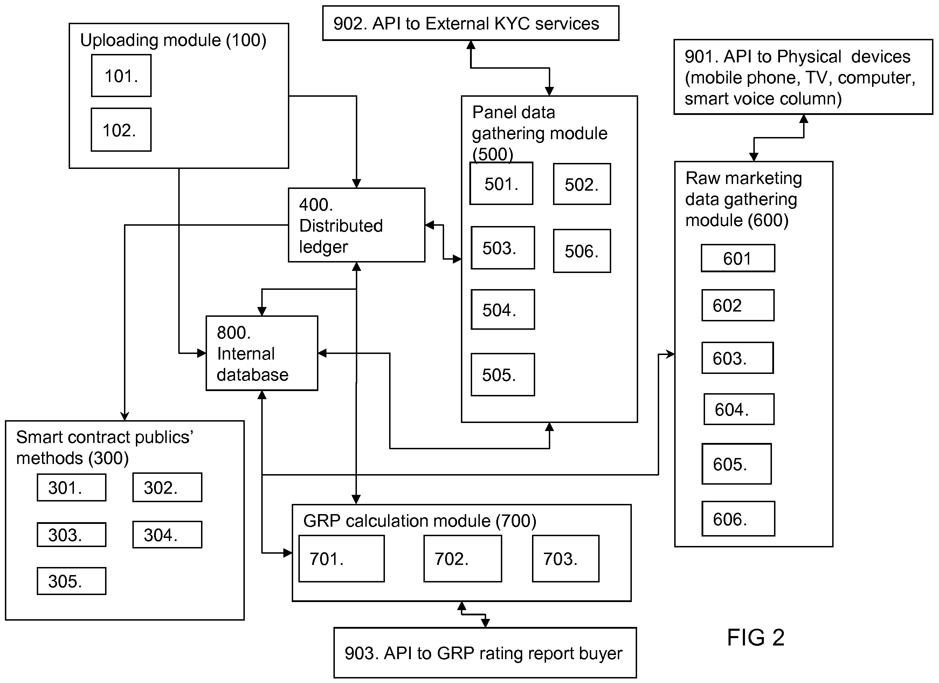

Figure 2 describes usage of two databases in parallel, first - an internal database for system operating, second - a distributed ledger for data auditing process.

The internal database 800 is storage for all uploaded data, which comprises following databases: panel members profiles statistics database 801, media database 802, socio-demographics statistics database 803, profiling table 804, database of raw marketing data and touchpoints for all panel members 805, database of GRP ratings for all Inventory ID in media database of all profiles 806, and settings of the system, which can be launched in cloud or physical server. Access to internal database restricted by system administrator password.

The distributed ledger 400 is decentralized database provided by blockchain platforms supporting smart contract functionality (for example like Etherium and Ton). Access to panel members profiles statistics, media database, socio-demographics statistics, raw marketing data and touchpoints for selected panel member, GRP ratings for selected inventory, storing in distributed ledger, has each user of blockchain through wallet (operating interface provided by blockchain). Restriction of changing once uploaded data is a main capability for the platform which is used in data auditing process organized by data auditor 205 carried out through the data auditor's computer 215.

Data stored in distributed ledger is used only for data auditing process. Data stored in internal database is used for providing GRP ratings in commercial way.

If the size of data needed to be storing in distributed ledger is less, then allowed in distributed ledger realization numbers it is stored in distributed ledger. If it is more than allowed numbers (like media database or touchpoints for selected panel members), in distributed ledger saved only a link to internal database with unique hash from storing data.

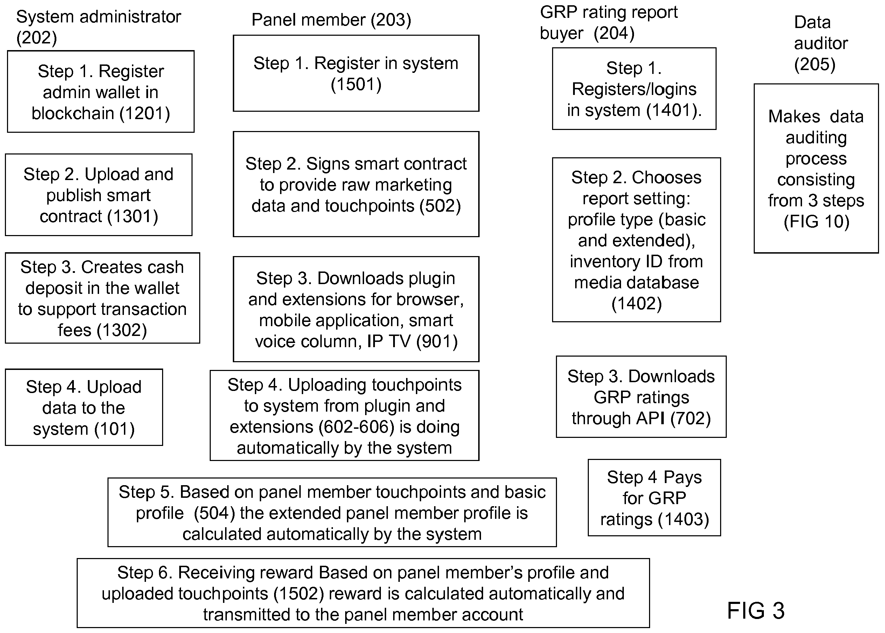

The step a. of the method is described in more detail as follows with the references to the fig 3, which also illustrates the activities of different type of users who are involved in the present system and method.

To initiate first data exchange process between the member and the system a person is registered in the system as a member of the system, the system is configured to receive the registration application 1501 from the person through the member interface 1500; to provide to the registered member smart contract for signing to receive from the member a basic profile 502 and confirmation of rights to share information about person choice (is a selected/non selected panel member) to data auditors and GRP rating report buyers; to provide to the member a connecting means (for example plugins and extensions for browser, mobile application, smart voice column, IP TV 901) to download and install to their at least one device 1000 (for example smartphone 1001, TV 1002, computer/laptop/tablet 1003, or other suitable device 1004; to upload touchpoints to the system from plugins and extensions 602-606; to perform automatic calculation of extended member profile based on the received touchpoints 1502 and basic profile 504 and calculation of the reward and to transmit the calculated reward to the member 203 account.

To initiate data exchange process between the GRP rating report buyer and the system the GRP rating report buyer is registered in the system through the user interface 1400, wherein the system is configured to receive the registration application 1401 from the GRP rating report buyer through the user interface 1400; to provide to the registered GRP rating report buyer means for choosing GRP ratings report settings 1402, such as profile type (basic profile and/or extended profile and/or mixed profile), audience, time period, Inventory ID in media database and sending request to internal database 800 to generate GRP rating report based on report settings set by buyer and GRP ratings calculated in the system for each profile by 701; to provide to the GRP rating report buyer GRP ratings report to download through the API 702; to receive payment from GRP rating report buyer for downloading the GRP ratings report.

To initiate data exchange process between the KYC provider and the system, the KYC provider is registered in the system through the KYC API.

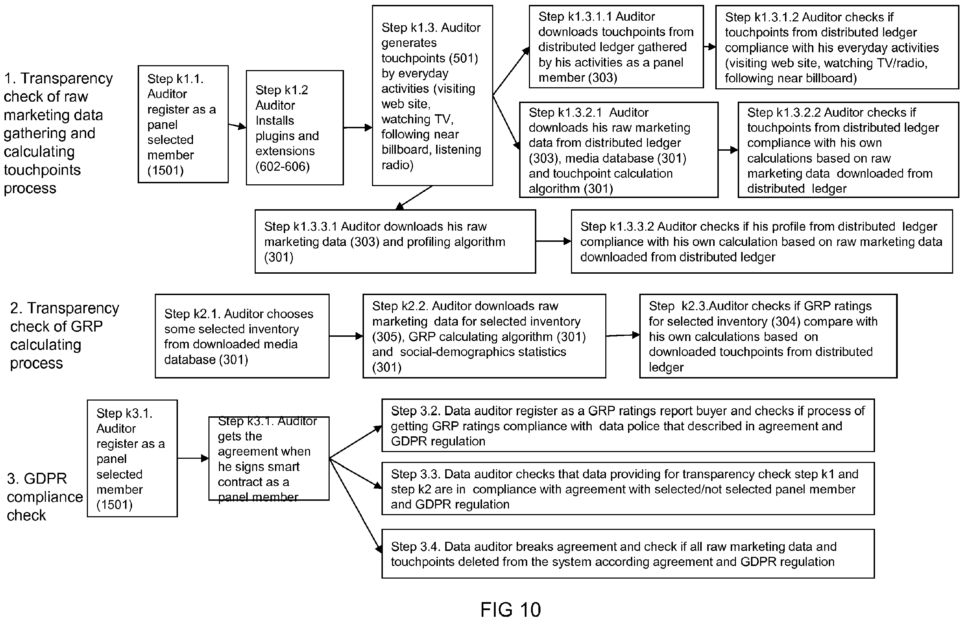

To initiate data exchange process between the data auditor and the system the data auditor is registered in the system through the data auditor interfaces 1202, wherein the system is configured to provide the data auditor corresponding means to carry out the data audit process, which is shown in Fig 10 and is further described in more detail.

To prepare and create a wallet for each system administrator according to the step c. of the method, the system is configured to receive the registration application of the administrator wallet 1301 in blockchain from the system administrator through the system administrator interface 1201; is configured to provide to the system administrator means for uploading and publishing smart contract in wallet 1301 and is configured to provide to the system administrator means to create cash deposit in the wallet to support transaction fees 1302.

In the step b. of the method to initiate the preparing process by uploading panel members profiles statistics, media database, socio-demographics statistics, raw marketing data and touchpoints for selected panel member, GRP ratings for selected inventory from the module 10 to distributed ledger 400 by system administrator, the system is configured to provide to the system administrator means for registering admin wallet in blockchain 1201; uploading and publishing smart contract in the wallet 1301, wherein the smart contract could be changed to support new versions of API 1301; creating cash deposit in the wallet to support transaction fees in blockchain 1302; for uploading media database (as an XLS/csv file) comprising list of all Inventory ID in media database for all type of media for which the system provides GRP (by executing 301, wherein the list is always updated to support new media inventory supplier; uploading socio-demographics statistic for regions (as an XLS/csv file) comprising list of population of all cities of all countries to expand panel statistics to the whole population of the city (by executing 301 and download socio-demographics statistics), wherein the list of population is always updated when new country is added to the system and when official authorities updated statistics; uploading algorithms used in GRP calculation (as an r/python script) comprising touchpoints calculation algorithm for all type of media, extended profiling algorithms to calculate attributes for each panel, GRP calculation algorithms for each inventory in media database for all profiles, wherein all algorithms are updated by uploading new versions to support better accuracy of calculations and improving functionality.

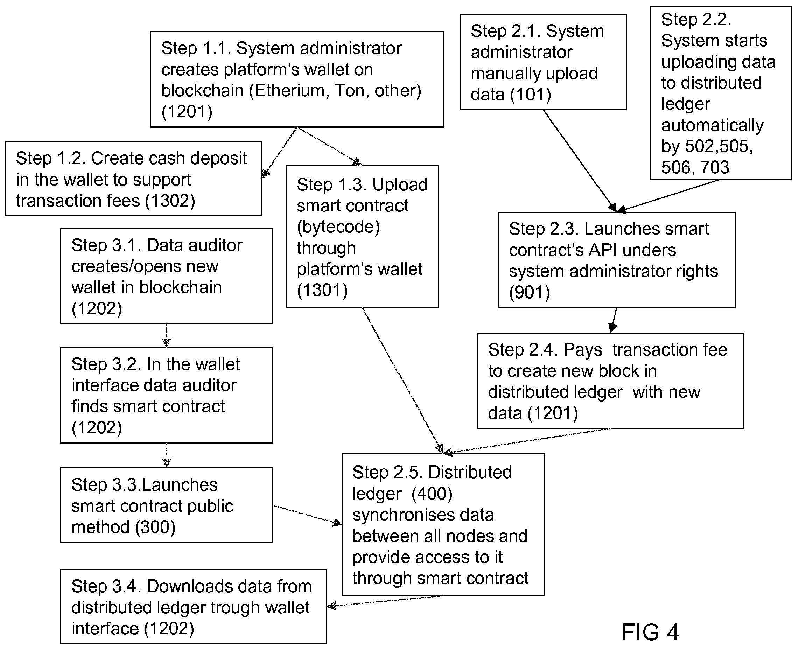

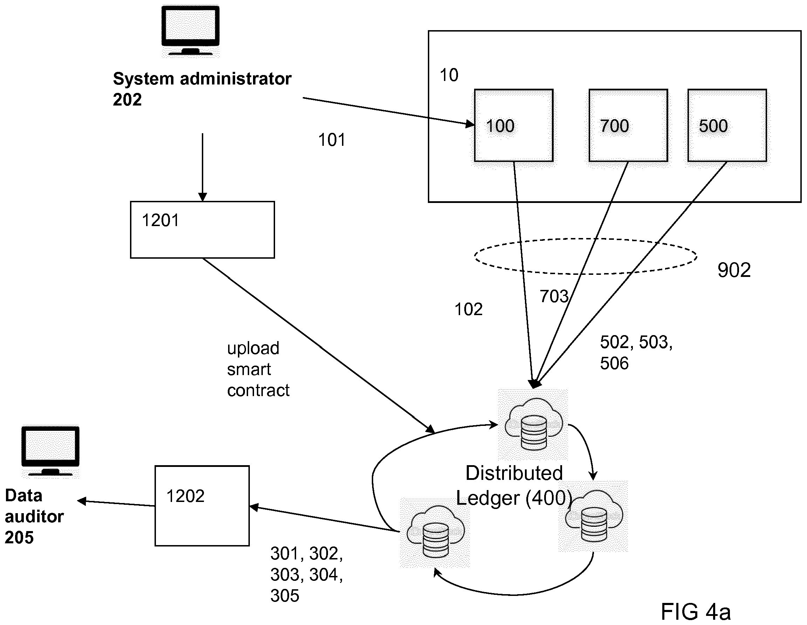

The step c. of the method is described in Fig 4 and Fig 4a, wherein process of implementing smart contract's capabilities on existing distributed ledger (TON, Etherium, other) to provide data for data auditors is explained in more detail.

Launching smart contract for system administrator of step c. comprises steps of creating wallet for system administrator in blockchain (Etherium, Ton, other) 1201; creating cash deposit in the wallet to support transaction fees 1302; uploading smart contract in bytecode through platform's wallet 1301 to distributed ledger 400; Downloading data from distributed ledger trough wallet interface 1202.

For launching a smart contract for member in step c. the system is configured to perform opening the data uploading interface 101 and system starts uploading data to distributed ledger automatically by executing methods 502, 505, 506, 703; launching smart contract's API under system administrator rights 901; to pay transaction fee to create new block in distributed ledger with new piece of uploaded data 1201 and distributed ledger 400 synchronizes data between all nodes and provide access to it through smart contract.

For launching smart contract for data auditor in step c. the system is configured to perform creating and opening new wallet in blockchain 1202 for data auditor 205; to provide to the data auditor the smart contract for signing 1202; to launch smart contract public method; to carry out the data download from distributed ledger 400 to data auditor device.

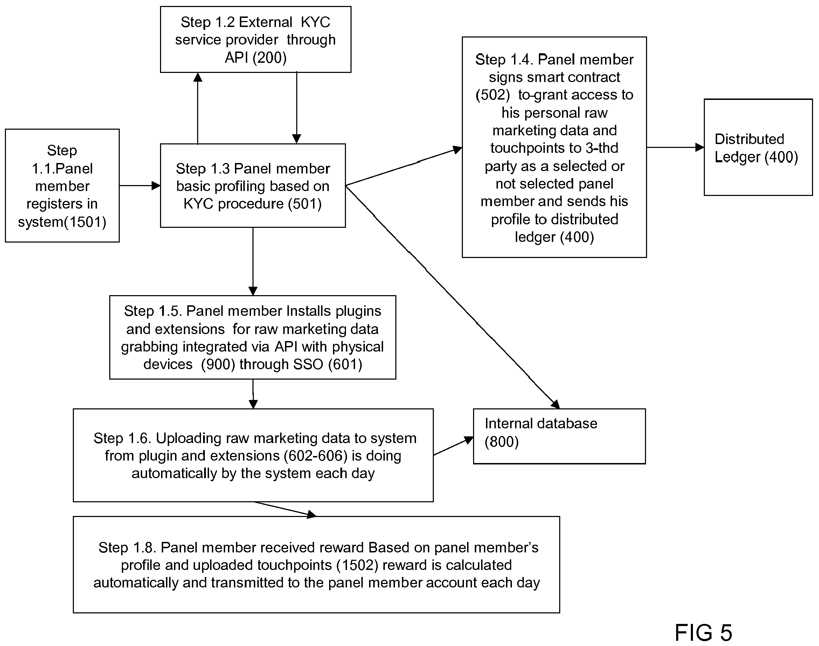

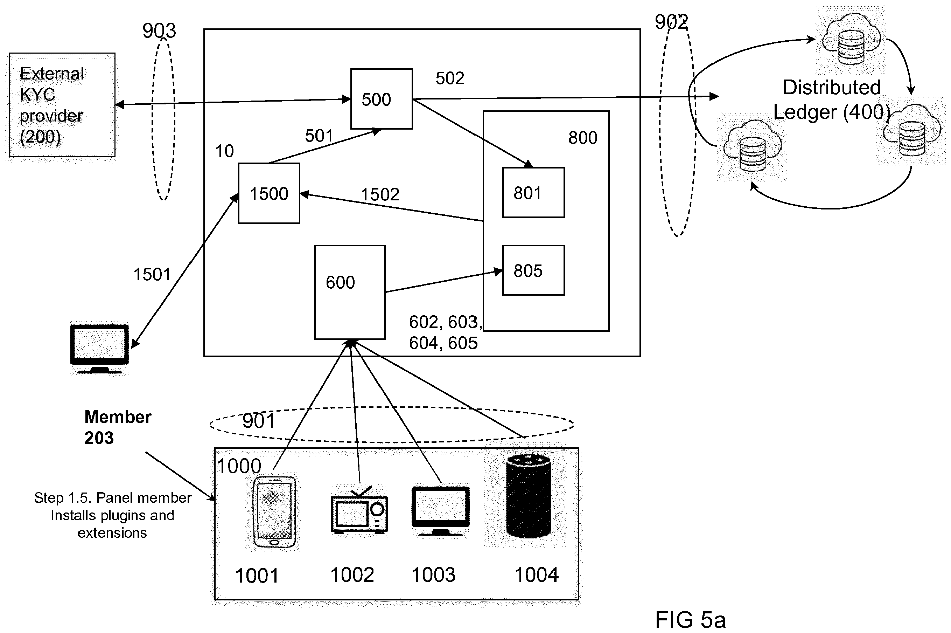

The step g. building a panel and gathering raw marketing data is described in more detail in Figure 5, wherein the step g. of the method further comprises updating the panel, receiving raw marketing data from the devices 1000 of the panel members, paying reward to the members who have participated in the panel and preparing raw marketing data and touchpoints of the selected panel members for data auditors.

Process creating and updating panel comprising panel members is described as follows.

In step g. for building a panel the system is configured to carry out following steps: receiving the registration application 1501 from a person through the user interface 1500 to register the person in the system as a member of the system; after registering the member in the system, carrying out basic profiling of the registered member based on KYC procedure 501; providing to the member 203 a smart contract 502 for signing to confirm the membership status to register the person as a selected member or not selected member and to receive from the member a grant to access and share the member's personal raw marketing data and touchpoints to the third parties; providing to the member a connecting means (for example plugins and extensions for browser 603, mobile/smartphone application 604, smart voice column 605, IP TV plugin 602) to download and install to their at least one device 1000 (for example smartphone 1001, TV 1002, computer/laptop/tablet 1003, or other suitable device 1004 to connect the member's devices 1000 via API 901 to server 601 of raw data gathering module 600; gathering raw marketing data from the member's devices 1000 through the connecting means 602, 603, 604, 605, 606 and saving the gathered data in the server 601; providing a reward to the panel member, wherein the reward is calculated automatically based on panel member's profile and uploaded raw marketing data and transmitted to the panel member account.

Each panel is updated when a new member is registered to panel and when the panel members decides not to participate in the panel.

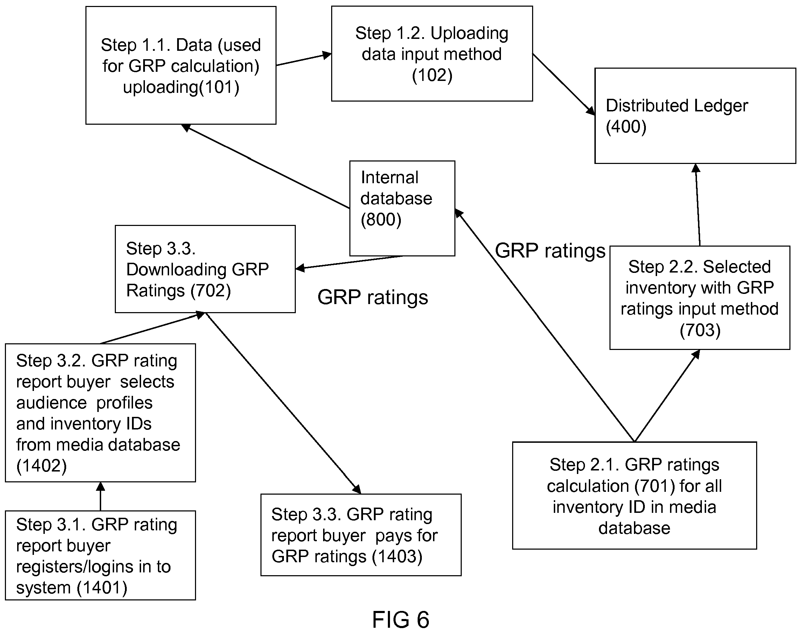

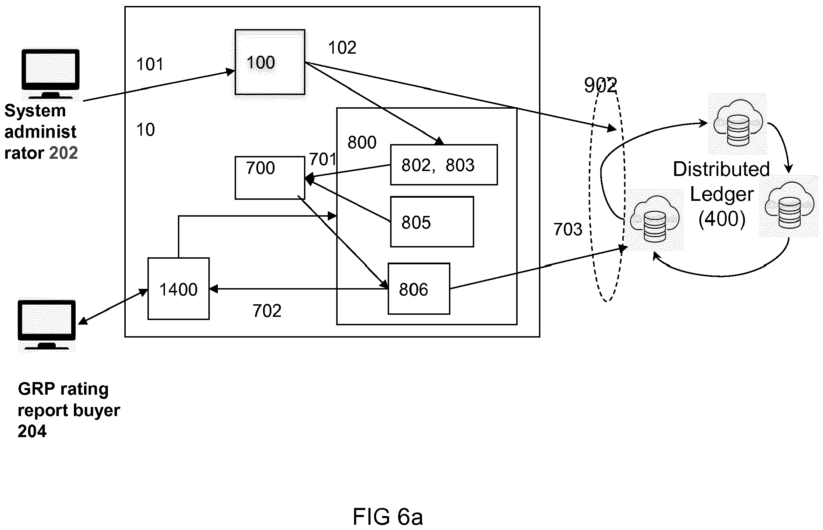

The step j. of the method is shown in Fig 6 and Fig 6a, which describes process of calculating transparent cross media GRP ratings, providing access to GRP ratings to GRP rating report buyers and preparing GRP ratings for selected inventory for data auditors.

For calculating the GRP ratings the system comprises data uploading interface 101, which is configured
to perform step 1.1. by allowing system administrator to upload 101 data for GRP calculation into internal database 800, wherein the uploaded data comprises media database, socio-demographics statistics, profiling table, GRP calculation algorithms; to perform step 1.2. uploading data input method 102 by sending uploaded data for GRP calculation to the distributed ledger 400.

After sending the uploaded data for GRP calculation to the distributed ledger 400, steps 2.1. and 2.2. is performed by calculating the GRP ratings 701 for all inventory IDs in media database for each profiles and sending the calculated GRP ratings for selected inventory to distributed ledger 400 by GRP ratings input method 703.

In step j. providing access to GRP ratings to a GRP rating report buyers further comprises registering the report buyer in the system through the user interface 1400), wherein the system is configured to receive the registration application 1401 from the GRP rating report buyer through the user interface 1400 and enabling to the report buyer to login to the system; providing to the registered GRP rating report buyer means for choosing GRP ratings report settings 1402, such as profile type (basic and or extended), audience, time period, Inventory ID in media database and sending request to internal database 800 to generate GRP rating report based on report settings set by GRP rating report buyer and GRP ratings calculated in the system for each profile by 701; providing means to GRP rating report buyer to receive a payment from GRP rating report buyer for downloading the GRP ratings report; providing to the GRP rating report buyer GRP ratings report to download through the API 903.

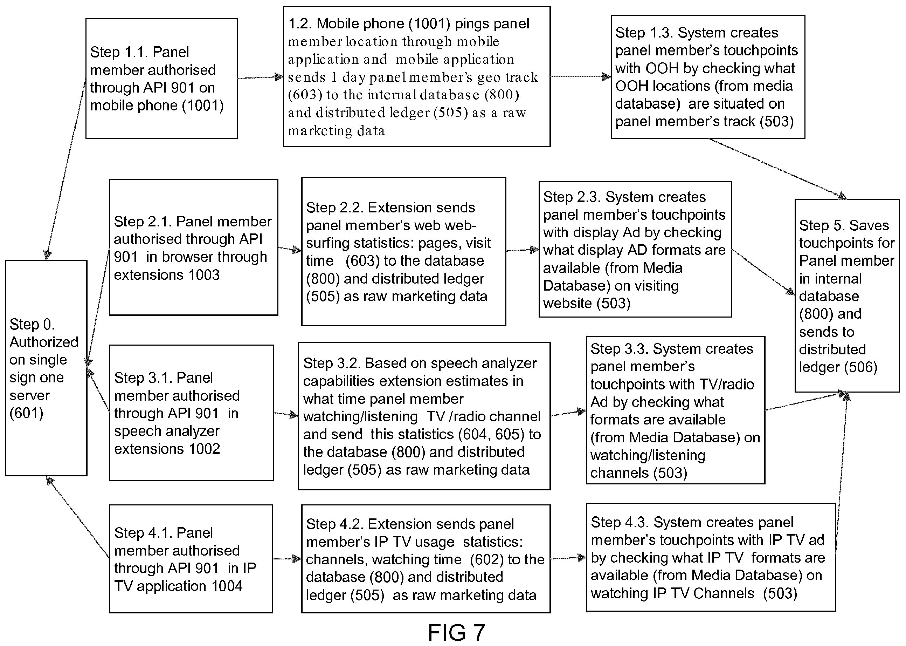

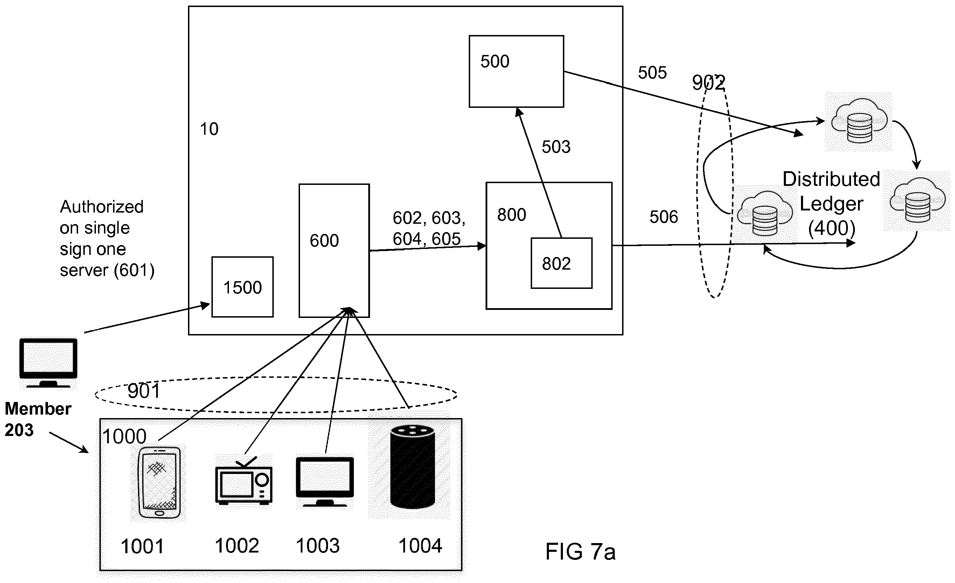

The step h. calculating touchpoints for the panel members is more precisely described in Figure 7 and Fig 7a, wherein the system is configured to provide to the system administrator means to upload corresponding calculation algorithm to the system 503 and the system is configured to perform steps of:
h1. authorizing 601 the member 203 in the server 800 by receiving from member the single sign one request in the member interface 1500;
h2. authorizing in raw data gathering module 600 the member's at least one device 1000 through the connecting means and API 901, wherein panel member is authorized on mobile or smartphone 1001, TV 1002, computer/laptop/tablet 1003, audio/video or other suitable device 1004 and wherein the connecting means is mobile or smartphone application, IP TV application, speech analyzer extension, web browser plugin or extension or other suitable software application;
h3. gathering raw marketing data through the connecting means and API 901 from at least one user's device 1001, 1002, 1003, 1004 and sending 602, 603, 604, 605 from the raw data gathering module 600 the gathered raw marketing data to the internal database 800 where the gathered raw marketing data is saved and to the panel data gathering module 500 and from panel data gathering module sending 505 the gathered raw marketing data to the distributed ledger 400, wherein
   h3.1. on gathering the raw marketing data from mobile/smartphone 1001 the mobile phone 1001 pings panel member location through mobile application and mobile application sends 603 periodically panel member's geo track as a raw marketing data to the internal database 800 and to the panel data gathering module 500 and from panel data gathering module sends 505 the gathered raw marketing data to the distributed ledger 400;
   h3.2. on gathering the raw marketing data from computer/laptop/tablet 1003 through the web browser the extension or plugin installed to the web browser sends 603 panel member's web-surfing statistics (visited webpages, visit time, click stream , online video watching, saved cookies from ad platforms and other suitable data that can be used for profiling and calculating touchpoints) as raw marketing data from the raw data gathering module 600 to the internal database 800 and to the panel data gathering module 500 and from panel data gathering module sends 505 the gathered raw marketing data to the distributed ledger 400;
   h3.3. on gathering the raw marketing data from audio and/or video device 1004 through the speech analyzer extension integrated to audio and/or video device estimates in what time panel member watching/listening TV/radio channel and sends 604, 605 this statistics as raw marketing data from the raw data gathering module 600 to the internal database 800) and to the panel data gathering module 500 and from panel data gathering module sends 505 the gathered raw marketing data to the distributed ledger 400;
   h3.4. on gathering the raw marketing data from IP TV 1002 through the extension installed to the IP TV sends 602 panel member's IP TV usage statistics (channels, watching time, and other suitable data that can be used for profiling and calculating touchpoints) gathered raw marketing data to the internal database 800 and to the panel data gathering module 500 and from panel data gathering module sends 505 the gathered raw marketing data to the distributed ledger 400;
h4. creating 503 the touchpoints for the panel member by checking the available media formats in media database 802, wherein
   h4.1. on gathering the raw marketing data from mobile/smartphone 1001 the system is configured to create panel member's touchpoints with OOH by checking from media database 802 what OOH locations are situated on panel member's track 503;
   h4.2. on gathering the raw marketing data from computer/laptop/tablet 1003 the system is configured to create panel member's touchpoints with display ad by checking from Media Database 802 what display AD formats are available on visiting website 503 ;
   h4.3. on gathering the raw marketing data from audio and/or video device 1004 the system is configured to create panel member's touchpoints with TV/radio Ad by checking from Media Database 802 what formats are available on watching/listening channels 503;
   h4.4. on gathering the raw marketing data from IP TV 1002 the system is configured to create panel member's touchpoints with IP TV ad by checking from Media Database 802 what IP TV formats are available on watching IP TV Channels 503;
h5. saving panel member's touchpoints in the internal database 800 and sending 506 the saved touchpoints to the distributed ledger 400.

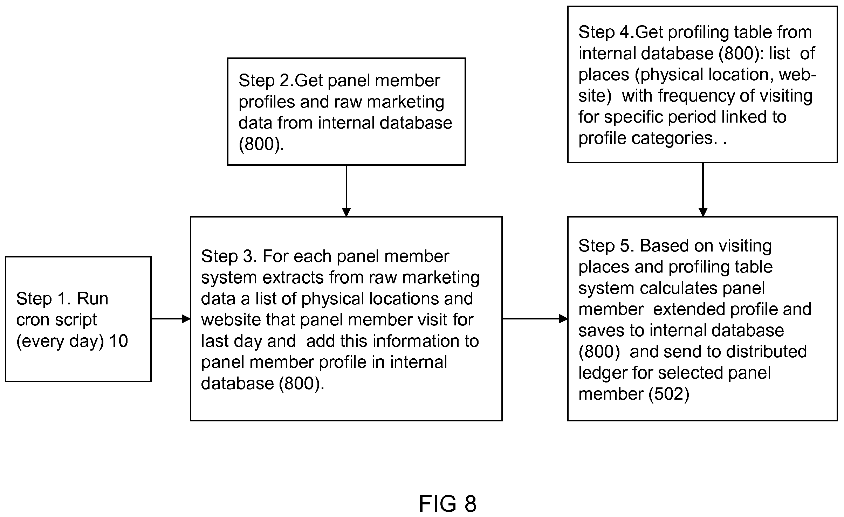

The step i. calculating 504 extended profile of the panel member 203 is described in more detail in Figure 8, wherein the server 10 of the system is configured to periodically (for example every hour, day, week or some other period) run a cron script or some other suitable script; to receive panel member profiles and raw marketing data from internal database 800; to extract for each panel member from raw marketing data a list of physical locations visited by panel member and websites that panel member visit for last period (for example last day) and add this information to panel member profile in internal database 800; to receive profiling table from internal database 800 comprising list of places (physical locations, web-sites) with frequency of visiting for specific period linked to profile categories; based on visiting places and profiling table to calculate an extended profile of each selected panel member and to save the selected panel member's calculated extended profiles to internal database 800 and send 502 to distributed ledger.

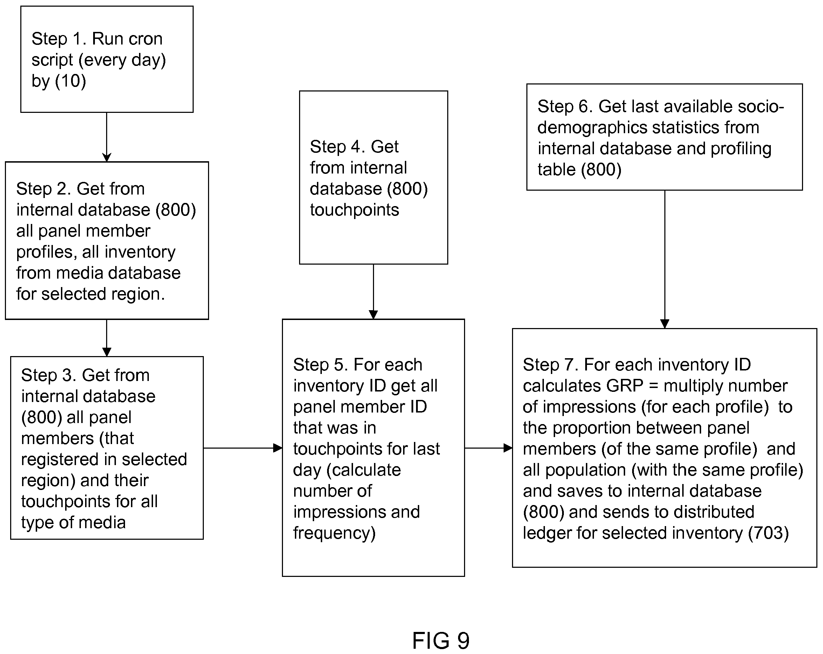

The step 2.1 of step j. shown in Fig 6 calculating 701 transparent and EU GDPR compliance GRP ratings for target profile for one Inventory ID in media database is described in Figure 9, wherein the server 10 of the system is configured to periodically (for example every day) run a cron script or some other suitable script; to receive from internal database 800 profiles of all panel members and, all Inventory ID in media database for selected region from media database 802; to receive from internal database 800 all active IDs of panel members (that registered in selected region) and their touchpoints for all Inventory ID in media database; to receive the touchpoints from internal database 800; to receive for each Inventory ID in media database all panel member IDs that were in touchpoints for last period and calculate the number of impressions and frequency; to receive last available socio-demographics statistics from internal database 800; to calculate for each Inventory ID in media database GRP ratings, wherein the GRP ratings comprises number of impressions (for each profile) multiplied to the proportion between panel members (of the same profile) and all population (with the same profile); and to save the calculated GRP ratings to internal database 800 and send the calculated GRP ratings to distributed ledger for selected inventory 703.

The system is further configured to enable through the report buyer interface to each registered GRP rating report buyer 204 to buy subscription 1403 with access to API 904 to download 702 GRP ratings report for chosen GRP ratings report settings 1402 inventory and profiles updated periodically (for example each day).

The step k. carrying out the data auditing process is described in more detail in Fig 10, Fig 5a and Fig 4a, wherein the data auditing process comprises transparency check of raw marketing data gathering and calculating touchpoints process, transparency check of GRP calculating process and GDPR compliance check, wherein
k1. the server 10 of the system is configured to carry out emulation to carry out the transparency check of raw marketing data gathered from at least device 1000 of a panel selected member 203 and transparency check of calculated touchpoints of panel selected members by
   k1.1. providing in a data auditor interface in distributed ledger 400 a registration means allowing the data auditor 205 through the computer 215 to register in the system as the panel selected member;
   k1.2. providing in a data auditor interface in distributed ledger 400 connecting means 602, 603, 604, 605, 606 allowing the data auditor 205 to download and install the connecting means to the corresponding raw data gathering devices to connect the data gathering devices to the system;
   k1.3. providing in a data auditor interface in distributed ledger 400 means allowing the data auditor to generate touchpoints by everyday activities (visiting web site, watching TV, following near billboard) by executing basic user profiling 501 method;
      k1.3.1.1. providing in a data auditor interface in distributed ledger 400 means allowing the data auditor to download touchpoints from distributed ledger 400 gathered by his/her own activities as a panel member by executing method 303 configured to download raw marketing data from distributed ledger 400 to data auditor's computer 215;
      k1.3.1.2. providing in a data auditor interface in distributed ledger 400 means allowing the data auditor to check if touchpoints from distributed ledger 400 are in compliance with the selected panel member's everyday activities (visiting web site, watching TV/radio, following near billboard);
      k1.3.2.1. providing in a data auditor interface in distributed ledger 400 means allowing the data auditor to download raw marketing data of the selected panel member by executing method 303 configured to download raw marketing data from distributed ledger 400 to data auditor's computer 215 and to download media database and touchpoint calculation algorithm by executing method 301 configured to download the media database and touchpoint calculation algorithm from distributed ledger 400 to data auditor's computer 215;
      k1.3.2.2. providing in a data auditor interface in distributed ledger 400 means allowing the data auditor to check if touchpoints from distributed ledger 400 are in compliance with his/her own calculations based on raw marketing data downloaded from distributed ledger 400;
      k1.3.3.1. providing in a data auditor interface in distributed ledger 400 means allowing the data auditor to download his/her raw marketing data by executing method 303 configured to download raw marketing data from distributed ledger 400 to data auditor's computer 215 and profiling algorithm by executing method 301 configured to download from distributed ledger 400 to data auditor's computer 215;
      k1.3.3.2. providing in a data auditor interface in distributed ledger 400 means allowing the data auditor to check if selected panel members profile from distributed ledger 400 are in compliance with his/her own calculation based on basic and extended profile downloaded from distributed ledger 400;
k2. the server 10 of the system is configured to carry out the transparency check of GRP calculating process by
   k2.1. providing in a data auditor interface in distributed ledger 400 means allowing the data auditor to choose preferred selected inventory (i.e. inventory ID that data auditor needs to audit from all selected inventories IDs in media database) from downloaded media database by executing method 301 configured to download media database from distributed ledger 400 to data auditor's computer 215;
   k2.2. providing in a user interface 1500 means allowing the data auditor to download raw marketing data for selected inventory by executing method 305 configured to download the raw marketing data for selected inventory from distributed ledger 400 to data auditor's computer 215, to download GRP calculating algorithm and social-demographics statistics by executing method 301 configured to download GRP calculating algorithm and social-demographics statistics from distributed ledger 400 to data auditor's computer 215;
   k2.3. providing in a data auditor interface in distributed ledger 400 means allowing the data auditor to check if GRP ratings for selected inventory compares his own calculations based on downloaded touchpoints with the calculations from distributed ledger 400 by executing method 304 configured to download from distributed ledger 400 to data auditor's personal computer 205 GRP rating of selected inventory (daily statistics), wherein the calculations are correct if both of the calculations are equal;
k3. the server 10 of the system is configured to carry out emulation to carry out the GDPR compliance check by
   k3.1. providing in a data auditor interface in distributed ledger 400 a smart contract allowing the data auditor 205 through the computer 215 to sign the smart contract as a panel member;
   k3.2. providing in a data auditor interface in distributed ledger 400 a registration means allowing the data auditor 205 through the computer 215 to register in the system as a GRP rating report buyer and to check if process of getting GRP ratings is in compliance with data police that described in agreement and EU GDPR regulation;
   k3.3. providing in a data auditor interface in distributed ledger 400 means allowing the data auditor through the computer 215 to check that data providing for transparency check of steps k1 and step k2 are in compliance with agreement with selected/not selected panel member and GDPR regulation;
   k3.4. providing in a data auditor interface in distributed ledger 400 means allowing the data auditor to break the agreement and check if all panel member's raw marketing data and touchpoints deleted from the system according agreement and GDPR regulation.

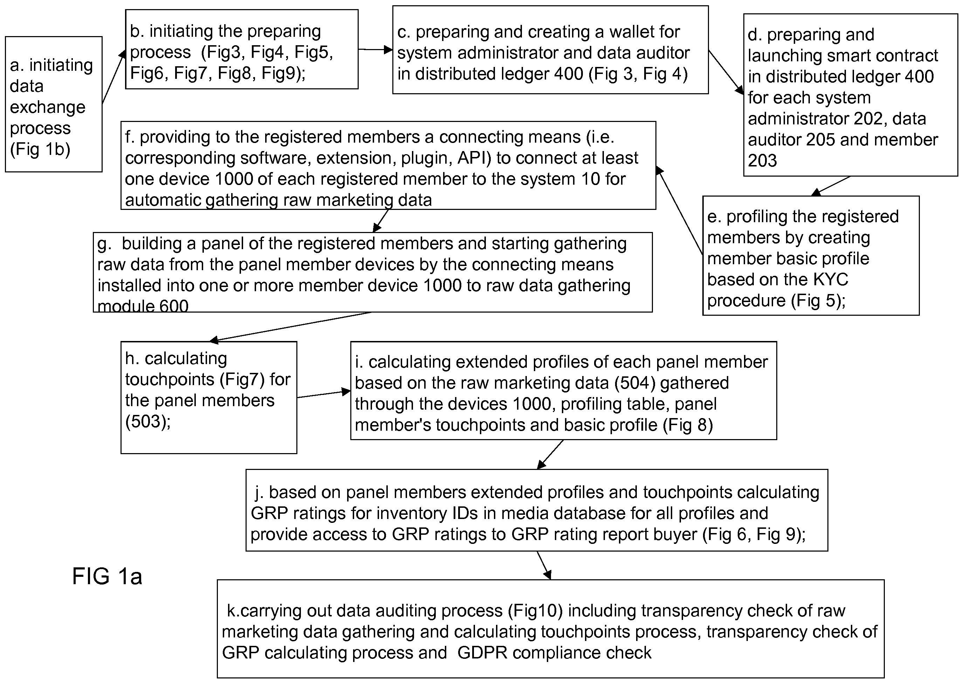

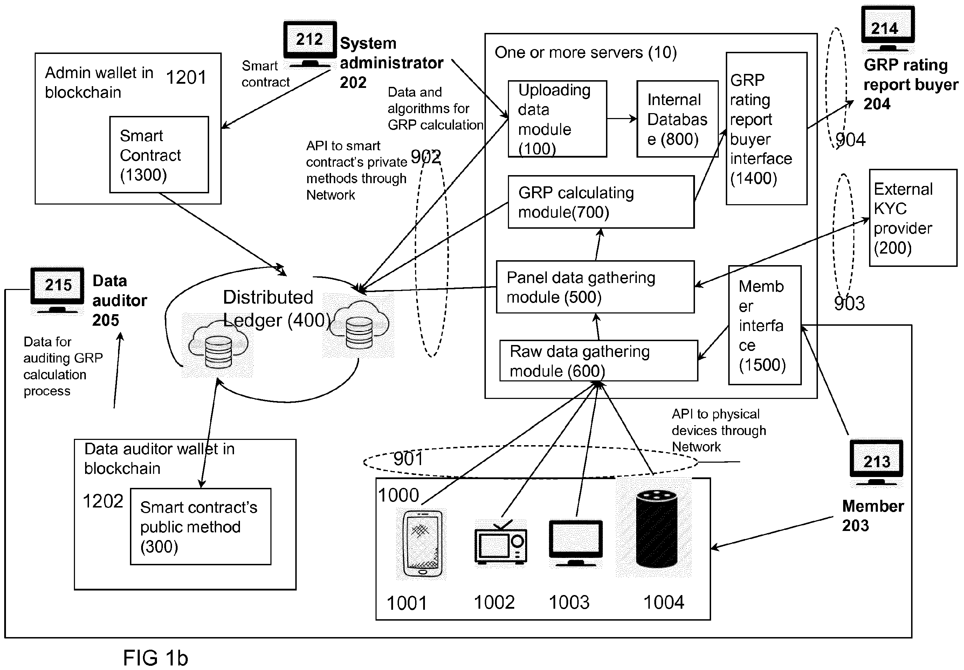

Figure 1b describes all connections between components of the system that are arranged to provide core functionality of the system, wherein a data processing system comprising means for carrying out the method according to present invention shown on Fig 1a for calculating transparent and GDPR compliance GRP ratings, wherein the system comprises at least one server 10, which is connected through the API 901 with external devices 1000, is connected through the API 902 with distributed ledger 400 and is connected through the API 903 with at least one external Know-Your-Client (KYC) service provider, wherein server 10 comprises an data uploading module 100 configured to upload data used in GRP calculation including media database, socio-demographics statistics and algorithms, a smart contract public methods module 300 configured to provide data auditor all panel members profiles statistics, media database, socio-demographics statistics, profiling table, raw marketing data and touchpoints for selected panel member, GRP ratings for selected inventory to make transparency check, a panel data gathering module 500 configured to manage panel members including register them, making basic and extended profiling, providing link to installing plugins and extension, calculating touchpoints and sending statistics about panel members to distributed ledger needed for transparency check, a raw marketing data gathering module 600 configured to download raw marketing data from physical devices by 1 panel member through plugins and extensions, a GRP calculating module 700 configured to calculate GRP ratings for all profiles and provide calculated GRP ratings to GRP report GRP rating report buyer, internal database 800 configured to store all data needed for panel members management, gathering raw marketing data and calculate GRP ratings and multiple interface components 1400, 1500 communicating with between the different type of users and external service providers and modules of server 10 and distributed ledger 400.

The modules 100, 500, 600, 700 are connected with each other via internal database 800, the module 300 is connected to the other modules 100, 500, 600, 700 through distributed ledger 400.

The uploading module 100 comprises data uploading Interface 101 configured to uploading data automatically through API or inserted manually and saving uploaded data (media database, socio-demographics statistics, algorithms), for example in XIS, CSV, Python, R format, in internal database 800 and smart contract private method 102 configured to send uploaded data input to the distributed ledger 400.

Data uploading interface 101 allows system administrator to upload media database, socio-demographics statistics, profiling table, GRP calculation algorithms to internal database 800 of the system: Algorithms used in data processing 503, 504, 701 (r script, python script, mathlab files and etc.); XLS, CSV data in non-binary code with structure predefined before uploading, like predefined dictionaries, media database comprising what advertising is shown/translated in each media channel, socio demographics statistics comprising comprising list of population of all cities of all countries (for example total population, number of men/women from age less than 15 years old, number of men/women from age 15 to 18, and etc) and profiling table comprising inventory Id, country, city, format, web site / address/ channel, owner and other data that can be used from profiling. Through the method 102 Send transaction (date, file) to Distributed Leger: uploaded files with: media database, socio-demographics statistics, algorithms is carried out.

The data uploaded to the internal database is used in GRP calculation process and can be downloaded from distributed ledger 400 by data auditor 205 through smart contract's public methods module 300.

Private method of smart contract 102, uploaded by system administrator, is configured to send uploaded data to distributed ledger 400. If size of data needed to be storing in distributed ledger 400 is less, then allowed in distributed ledger realization numbers it is stored in distributed ledger. If it is more than allowed numbers (like media database or touchpoints for selected panel members), in distributed ledger saved only a link to internal database with unique hash from storing data.

The smart contract public methods module 300 comprises method 301 configured to download from distributed ledger 400 to data auditor's personal computer/laptop/tablet 215 or to any other compatible device files with all revisions: media database, socio-demographics, algorithms scripts, profiling table downloading; method 302 configured to download from distributed ledger to data auditor personal computer daily dynamic statistic for panel members, which comprises number of panel members, structure of panel members based on sex/age/location/ interests, number of selected/non selected members, statistic of average touchpoints (for example number of touchpoints for one panel member per day, per country, per type of media); method 303 configured to download from distributed ledger to data auditor's computer 215 raw marketing data generated automatically by each selected panel member on sign in (daily dynamics per member id), which comprises member id, basic member profile and extended member profile, date stamp with touchpoint with inventory id; method 304 configured to download from distributed ledger 400 to data auditor's personal computer 205 GRP rating of selected inventory (daily statistics); method 305 configured to download from distributed ledger to data auditor's computer 215 raw marketing data from all panel members for selected inventory.

The public method of smart contract 300 is arranged to launch by any data auditor 205 and to provide data auditor 205 ability to download 301, 302, 303, 304, 305 data from distributed ledger 400.

The panel data gathering module 500 comprises method 501 configured to perform panel member basic profiling; panel member profile smart contract input private method 502 configured to carry out sending transaction about panel member (id, base profile, rights: selected or not) to the distributed ledger 400; method 503 configured to carry out calculating touchpoints and ID of each member; method 504 configured to carry out calculating extended profile of each member; method 505 configured to carry out sending transaction to selected panel member and method 506 configured to carry out sending transactions to selected inventory.

After a person registers in the system as member, the system is configured to initiate the KYC procedure through the external KYC service provider 201 by calculating the basic profile of registered member based on member's country, sex, age. To allow the registered member to pass the KYC procedure external link in member interface 1500 for identification (like payment forms) provided by external KYC provider 200. Then KYC provider asks the member 203 to upload official documents defined by KYC provider (for example copy of driving license, passport) and the basic profile of the member is calculated and sent to the system automatically.

After the member passes through KYC procedure, the member will be asked to repeat this in future according to the KYC policy and/or market needs (once a year/once a 3 month), which is defined in the internal database 800.

After profiling the member 203 the system is configured to provide to the member to select the member status type: selected member or non-selected member by signing smart contract in member interface 1500. Selected member provides all raw marketing data with his touchpoints through public methods of smart contract 305. Not selected panel member provides only general statistics (i.e. average number of touchpoints per day per media) for his profile 302. Depends of his choose and his profile he will get different level of rewards.

The private method of smart contract 502 is arranged to be launched under system administrator 202 privileges. When registered panel member agrees to participate in a panel research, pass KYC procedure and choose the status either to become selected member or non-selected member, the member agrees with the choice in 1500 and transaction with agreement details sends automatically to distributed ledger.

If the member wants to un-sign the agreement, the member needs to make another choice in 1500 and transaction with agreement breaking sent automatically to the distributed ledger. If the member doesn't want to be panel member, the member initiates breaking agreement in user interface 1500, the system receives through private method of smart contract 502 corresponding command and is configured to delete all raw marketing data and touchpoints associated with that panel member, that has a link from distributed ledger and delete all his data in internal database 800. And all extensions and plugins 601-606 will be blocked.

The method 503 configured to calculate touchpoints and ID of each member calculates touchpoints for one member based on media database comprising what advertising is shown/translated in each media channel and raw marketing data from each data source. After member signs the smart contract the member needs to download and install all extensions and plugins for all devices 601-604 that can grab raw marketing data. By combining raw marketing data with media database, the system calculates touchpoints for one day by one user with all ad media vehicles.

For example, for the display ad the system combines visited website with ad media formats that the web site provides. While the website opens, ad formats can be recognized, by finding on open webpage tracking code provided by digital ad platforms. For TV and radio, the system recognizes specific channel and compares with number of ad clips and their size. For OOH the system compares user track from mobile APP.

Method 504 configured to calculate extended profile of each member calculates profile of each member (except age, sex and country) based on raw marketing data gathered through the devices 100, profiling table and sending/updating it in internal database 800. Profiling is based on visited web site, tv watching, radio listening, visited places and web site. It is used profiling table that classify user to some group based on their common behavior. Method 505 configured to carry out sending transaction to selected panel member with raw marketing data, touchpoints with ad, profile (basic + extended). This is private method of smart contract. For selected panel members raw marketing data and touchpoints are sent to the distributed ledger 400.

The method 506 configured to carry out sending transactions to selected inventory is private method of smart contract. All touchpoints for selected inventory are sent to the distributed ledger.

Raw marketing data gathering module 600 comprises: Server 601. Single sign on; Method 602. Download raw marketing data by panel member ID from IPTV plugin; Method 603. Download raw marketing data by panel member ID from web browser extension; Method 604. Download raw marketing data by panel member ID from mobile app; Method 605. Download raw marketing data by panel member ID from voice analyzers extension.

Method 606. Download raw marketing data by panel member ID from other extensions. System works with browser plugins (to download raw marketing data generated by panel member when panel member contacts with display ad), special mobile application (to download raw marketing data with panel member's movements near OOH ad), voice analyzer extensions (like Amazon Echo) to download raw marketing data with panel member's TV watching and listening radio in home, in car and on work, IPTV plugin to download raw marketing data with panel member's Digital TV watching and other possible raw data grabbing tools that helps system to understand user ad consumption in different media.

Examples of raw marketing data: panel member's track with his everyday activities in which system detects all impressions with ad (from selected media database) in all channels. For example, plugin in browser works as Ad blocker solution (that detected all display ad). Analyzing IPTV broadcasting channel system can recognizes ad pauses in TV translation and measure number of ad clips panel member could see. Using Amazon Echo, system can analyze that radio station broadcasting or TV channel, detect it names and recognize ad clips. Using mobile app system tracks panel member's path and analyze what billboards he could see, comparing his track and billboards locations.

The GRP calculating module 700 comprises: method 701 configured to calculate GRP ratings of all profiles and store calculated GRP ratings in the internal database 800; interface 702 configured to download GRP ratings by GRP rating report buyer through API or manually to computer and method 703 configured to save GRP ratings for selected inventory to distributed ledger.

Method 701. GRP ratings calculation for all inventory ID in media database. Calculating GRP ratings for all inventory ID in media database for all profiles based on touchpoints with and country city/population statistics

Calculating GRP ratings for all inventory ID in media database ratings for all profiles based on touchpoints with ad and country city/ population statistics. System stores all touchpoints of our all panels users with all ad inventory IDs. To extend panel data analytics to the whole population is uses official statistics. System calculates all necessary statistic coefficient that shows, representativeness of current panel to different audience group.

Interface 702. GRP ratings downloading. Download GRP ratings (through API or manual) for all inventory ID in media database. This method is used to provide clients access to GRP ratings of all inventory.

Method 703. Selected inventory with GRP ratings input smart contract private method: send transaction for selected inventory with GRP rating for all supported profiles. This is private method of smart contract that launched under system administrator privileges. Method is used to upload GRP rating for selected inventory to distributes ledger for all types of profiles by sending transaction. Selected inventory is chosen by system administrator when the system administrator uploads media database through data uploading interface 101.

The internal database 800 comprises: Panel member profiles, algorithms scripts, media database, socio demographics statistics, raw marketing data, profiling table, touchpoints, GRP ratings for all profiles. Internal database: users, algorithms, media database, socio demographics statistics, raw marketing data, touchpoints, GRP ratings. This is databases where stores all data needed for platform.

Distributed Ledger module 400 comprises: Wallet, Blockchain Nodes, Smart contract execution environment. Distributed ledger organized with support of blockchain technologies. It can be done on each blockchain supporting smart contracts capabilities (Etherium, TON).

External KYC-service (for setting age, sex, country of new panel member) 200: Service that provide functionality to gather user's personal data (driving license, passport, other), validate it and return an answer needed for basic user profiling: age, sex, country of leaving.

## Claims

1. Method of operating data-processing system for calculating transparent and GDPR compliance GRP ratings comprises steps of:
a. initiating data exchange process by registering system administrator account, members, GRP rating report buyer, KYC provider and data auditor in the system through the user interfaces (1400, 1500) in one or more servers (10);
b. initiating the preparing process by uploading profile statistics of registered members, media database, socio-demographics statistics, profiling table, raw marketing data and touchpoints for selected panel member, GRP ratings for selected inventory from the server (10) to distributed ledger (400);
c. preparing and creating a wallet for system administrator and data auditor, integrating system with distributed ledger (400) through created system administration wallet;
d. preparing and launching smart contract in distributed ledger (400) for each system administrator (202), data auditor (205) and member (203);
e. profiling the registered members by creating member basic profile based on the KYC procedure;
f. providing to the registered members a connecting means to connect at least one device (1000) of each registered member to the system (10) for automatic gathering raw marketing data with their impressions with advertising in different channels;
g. building a panel of the registered members and starting gathering raw data from the panel member devices by the connecting means installed into one or more member device (1000) to raw data gathering module (600);
h. calculating (503) touchpoints for the panel members;
i. calculating (504) extended profiles of each panel member based on the raw marketing data gathered through the devices (1000), profiling table, panel member's touchpoints and basic profile;
j. based on panel members extended profiles and touchpoints calculating GRP ratings for all inventory IDs in media database for all profiles, wherein all profiles comprise basic profiles, extended profiles and mixed profiles, wherein mixed profile is a combination of basic profile and extended profile) and providing access to GRP ratings to GRP rating report buyer;
k. carrying out data auditing process including transparency check of raw marketing data gathering and calculating touchpoints process, transparency check of GRP calculating process and GDPR compliance check.

2. A data processing system comprising the means for carrying out the method of claim 1, **characterized by** that the system comprises at least one server (10), which is connected through the API (901) and by connecting means with external devices (1000), is connected through the API (902) with distributed ledger (400) and is connected through the API (903) with at least one external KYC service provider, wherein server (10) comprises an data uploading module (100); a smart contract public methods module (300); a panel data gathering module (500); a raw marketing data gathering module (600); a GRP calculating module (700); internal database (800) configured to store data needed for panel members management, gathering raw marketing data and calculate GRP ratings and multiple interface components (1400, 1500) communicating with between the different type of users, external service providers and modules of server (10) and distributed ledger (400).
